# EUROPÄISCHE PATENTSCHRIFT

(11) **EP 2 338 620 B1**
(45) Veröffentlichungstag und Bekanntmachung des Hinweises auf die Patenterteilung: **13.02.2013**
(21) Anmeldenummer: 09015966.6
(22) Anmeldetag: 23.12.2009
(51) Int. Cl.: B21K 25/00, B23P 11/00

(54) **Rotationssymmetrisches Verbundbauteil und Verfahren zu seiner Herstellung**
Rotation-symmetrical component obtained by assembling two workpieces and method for its production
Composant à rotation symétrique obtenu par l'assemblage de deux pièces et son procédé de fabrication

(43) Veröffentlichungstag der Anmeldung: 29.06.2011
(73) Patentinhaber: Leifeld Metal Spinning AG, 59229 Ahlen (DE)
(72) Erfinder: Nillies, Benedikt, 59227 Ahlen (DE)
(74) Vertreter: Wunderlich, Rainer

(56) Entgegenhaltungen:
- EP-A1- 0 340 128
- EP-A1- 1 065 016
- EP-A2- 1 944 211
- DE-A1- 19 532 519

## Beschreibung

Die Erfindung betrifft ein Verfahren zum Herstellen eines rotationssymmetrischen Verbundbauteiles, welches aus mindestens einem ersten Teilkörper und mindestens einem zweiten Teilkörper durch formschlüssige Verbindung hergestellt wird, wobei das formschlüssige Verbinden durch spanloses Umformen auf einer Umformmaschine, insbesondere einer Drückwalzmaschine erfolgt.

Die Erfindung betrifft ferner ein rotationssymmetrisches Verbundbauteil mit mindestens einem ersten Teilkörper und mindestens einem zweiten Teilkörper, welche formschlüssig miteinander verbunden sind.

Bei dem rotationssymmetrischen Verbundbauteil kann es sich beispielsweise um ein Getriebe- oder ein Kupplungsbauteil für ein Kraftfahrzeug handeln.

Ein Verfahren zur Herstellung eines rotationssymmetrischen metallischen Werkstücks aus zwei Werkstück-Teilkörpern ist aus der DE 195 32 519 C2 bekannt. Bei diesem Verfahren wird mittels eines Drückvorganges Material von einem Außenumfang eines ersten Werkstück-Teilkörpers in dessen Axialrichtung zu einem zweiten Werkstück-Teilkörper transportiert und zumindest teilweise in dessen strukturierte Oberflächenkontur hineingedrückt. In einer alternativen Ausgestaltung dieses Verfahrens ist vorgesehen, mittels eines Drückvorganges Material des zweiten Werkstück-Teilkörpers zunächst in dessen Radialrichtung nach innen zum ersten Werkstück-Teilkörper zu transportieren und zumindest teilweise in dessen strukturierte Oberflächenkontur hineinzudrücken, wobei im letzten Teil des Drückvorganges die Zustellbewegung der Drückrolle zusätzlich eine axiale Bewegungskomponente erhält, um eine in Umfangsrichtung gleichmäßige Materialverteilung zu erreichen.

Aus der EP 1 065 016 B1 ist ein Verfahren zur Herstellung einer Hohlwelle, die an einem ihrer Enden einen Flansch aufweist, bekannt. Zur Verbindung eines Hohlwellenelements mit einem Flanschelement wird das Hohlwellenelement in seiner axialen Richtung mittels einer Drückrolle zum Flanschelement hin gedrückt und in einen verengten Abschnitt des Flanschelements eingedrückt.

Der Erfindung liegt die **Aufgabe** zugrunde, ein Verfahren zur Herstellung eines rotationssymmetrischen Verbundbauteiles anzugeben, welches besonders wirtschaftlich ist, und ein entsprechendes Verbundbauteil bereitzustellen.

Die Aufgabe wird erfindungsgemäß durch ein Verfahren mit den Merkmalen des Anspruchs 1 gelöst. Die Aufgabe wird ferner durch ein rotationssymmetrisches Verbundbauteil mit den Merkmalen des Anspruchs 14 gelöst. Bevorzugte Ausgestaltungen sind in den abhängigen Ansprüchen angegeben.

Bei dem Verfahren ist vorgesehen, dass ein erster hülsenförmiger Verbindungsabschnitt des ersten Teilkörpers und ein zweiter hülsenförmiger Verbindungsabschnitt des zweiten Teilkörpers radial überdeckend zueinander angeordnet werden. Das erfindungsgemäße Verfahren ist dadurch gekennzeichnet dass der erste hülsenförmige Verbindungsabschnitt mit einem in Axial- und Umfangsrichtung ausgebildeten Hinterschnittbereich versehen wird, in welchen der zweite hülsenförmige Verbindungsabschnitt zum Bilden der formschlüssigen Verbindung durch ausschließlich radiales Zustellen mindestens einer Umformrolle eingeformt wird, wobei der zweite hülsenförmige Verbindungsabschnitt zumindest bereichsweise radial verdickt wird.

Bei dem erfindungsgemäßen Verbundbauteil ist vorgesehen, dass ein erster hülsenförmiger Verbindungsabschnitt des ersten Teilkörpers und ein zweiter hülsenförmiger Verbindungsabschnitt des zweiten Teilkörpers radial überdeckend zueinander angeordnet sind und dass der erste hülsenförmige Verbindungsabschnitt einen in Axial- und Umfangsrichtung ausgebildeten Hinterschnittbereich aufweist, in welchen der zweite hülsenförmige Verbindungsabschnitt zum Bilden der formschlüssigen Verbindung durch ausschließlich radiales Zustellen mindestens einer Umformrolle eingeformt ist, wobei der zweite hülsenförmige Verbindungsabschnitt zumindest bereichsweise radial verdickt ist, und
dass der erste Teilkörper (10) einen sich radial nach außen erstreckenden Radialabschnitt (22) aufweist, in welchem ein Ausgleichsbereich (24) zur Aufnahme von überschüssigem Material des zweiten Teilkörpers (20) ausgebildet ist.

Ein Grundgedanke der Erfindung ist darin zu sehen, die formschlüssige Verbindung zwischen den zu verbindenden Teilkörpern nicht, wie im Stand der Technik, mittels eines Drück- oder Drückwalzverfahrens, sondern ähnlich einem Profilierverfahren durch zentrisches Anformen des zweiten Teilkörpers an den ersten Teilkörper zu bewirken. Ein wesentlicher Unterschied zu den bekannten Drück- oder Drückwalzverfahren besteht dabei darin, dass die Umformrolle nicht lediglich punktförmig, sondern im Wesentlichen über die gesamte axiale Länge des zweiten Verbindungsabschnitts an dem zweiten Teilkörper anliegt. Anders als beim Drücken oder Drückwalzen tritt somit keine Kombination aus Zug- und Druckkräften auf. Vielmehr wirken im Wesentlichen lediglich radiale Druckkräfte, die zu einer Verdickung des zweiten Verbindungsabschnitts führen. Darüber hinaus können geringe axiale Druckkräfte auftreten, die eine axiale Werkstoffverteilung bewirken. Durch das radiale und axiale Fließen des Materials können Hinterschnitte gefüllt werden, die mit der Umformrolle nicht erreichbar sind.

Die Verbindung der Teilkörper erfolgt also durch Profilieren. Im Unterschied zu üblichen Profilierrollen kann die Umformrolle eine unkonturierte Außenumfangsfläche aufweisen, da sie vorrangig nicht der Einformung eines Außenprofils, sondern der radialen Verschiebung des zweiten Verbindungsabschnitts zur Herstellung der formschlüssigen Verbindung mit dem ersten Verbindungsabschnitt dient. Grundsätzlich ist es aber auch möglich, mittels der Umformrolle zusätzlich ein Außenprofil in den zweiten Teilkörper einzuformen.

Durch die hauptsächlich wirkenden Radialkräfte erfolgt eine Durchmesserreduzierung und radiale Verdickung des zweiten Verbindungsabschnitts. Die radiale Verdickung ermöglicht ein vollständiges Einformen des zweiten Verbindungsabschnitts in den Hinterschnittbereich des ersten Verbindungsabschnitts. Das Material des zweiten Teilkörpers wird also in den Hinterschnittbereich eingewalzt. Hierdurch wird eine besonders sichere und feste Verbindung der beiden Teilkörper erreicht, die zu einem Verbundbauteil mit Eigenschaften wie ein einstückiges Bauteil führt.

Die radiale Verdickung des zweiten Verbindungsabschnitts wird im Wesentlichen durch axiale Anschläge bewirkt, die ein unkontrolliertes axiales Fließen des Werkstoffs des zweiten Teilkörpers verhindern. Die axialen Anschläge können entweder durch die Umformrolle, durch den ersten Teilkörper, durch ein sonstiges Anschlagelement oder durch eine Kombination hiervon bereitgestellt werden.

Der Hinterschnittbereich des ersten Verbindungsabschnitts dient im Wesentlichen der Fixierung des zweiten Teilkörpers an dem ersten Teilkörper in Axial- und Umfangsrichtung. Dabei wird der zweite Teilkörper in mindestens einen Hinterschnitt des ersten hülsenförmigen Verbindungsabschnitts derart eingeformt, dass er gegen ein Verdrehen und axiales Lösen gesichert ist.

Durch die Kaltumformung wird eine Verfestigung der Oberfläche und eine verbesserte Korrosionsbeständigkeit erreicht. Insgesamt kann durch das erfindungsgemäße Verfahren ein rotationssymmetrisches Verbundbauteil besonders wirtschaftlich hergestellt werden. Dabei ist das Verbundbauteil grundsätzlich nicht auf zwei Teilkörper beschränkt. So können auch mehrere Teilkörper, beispielsweise drei oder vier Teilkörper, durch das erfindungsgemäße Verfahren miteinander formschlüssig und fest verbunden werden.

Nach der Erfindung ist es besonders bevorzugt, dass eine Rotationsachse der Umformrolle parallel zu einer Rotationsachse des Verbundbauteiles ist. Dies bewirkt, dass die Umformrolle in axialer Richtung des zweiten Teilkörpers mit gleicher Umfangsgeschwindigkeit an dem zweiten Teilkörper, insbesondere dessen Verbindungsabschnitt, anliegt. Hierdurch werden im Wesentlichen lediglich radiale Druckkräfte auf den zweiten Teilkörper ausgeübt und es wird eine besonders gleichmäßige Materialverteilung erreicht. Durch die zur Rotationsachse des Verbundbauteiles parallele Umformrolle kann somit ein besonders hochwertiges Verbundbauteil hergestellt werden.

Die axiale Sicherung und die Sicherung in Umfangsrichtung kann grundsätzlich in vielfältiger Weise, beispielsweise durch Bohrungen oder Sacklöcher in dem ersten hülsenförmigen Verbindungsabschnitt, bereitgestellt werden. Nach der Erfindung ist es jedoch bevorzugt, dass der Hinterschnittbereich des ersten hülsenförmigen Verbindungsabschnitts mindestens einen Hinterschnitt in Axialrichtung und einen Hinterschnitt in Umfangsrichtung aufweist.

Der Hinterschnitt in Axialrichtung weist mindestens eine axiale Nut oder Wand auf, welche der Sicherung in Umfangsrichtung dient. Vorzugsweise ist eine Profilverzahnung mit einem über den Außenumfang des ersten hülsenförmigen Verbindungsabschnitts verteilten Nutprofil vorgesehen. Die Profilverzahnung beziehungsweise das Nutprofil ist durch eine Vielzahl von axial ausgerichteten Nuten und Zähnen gebildet, die grundsätzlich eine beliebige Form aufweisen können. Beispielsweise sind Nuten beziehungsweise Zähne mit einem halbkreisförmigen, einem V-förmigen oder einem rechteckigen Querschnitt denkbar.

Die axiale Sicherung ist vorzugsweise durch einen Hinterschnitt in Umfangsrichtung, beispielsweise eine umlaufende Nut oder Wand gebildet. Diese Nut oder Wand ist in einer bevorzugten Ausgestaltung in einem von der axialen Nut beziehungsweise dem axialen Nutprofil getrennten Axialabschnitt des ersten hülsenförmigen Verbindungsabschnitts ausgebildet. Durch die räumliche Trennung der Hinterschnitte in Axial-und Umfangsrichtung kann eine besonders sichere axiale Sicherung und Sicherung in Umfangsrichtung erzielt werden, da die Hinterschnitte sich nicht gegenseitig beeinflussen.

Je nach den Anforderungen an das zu fertigende Bauteil kann es vorteilhaft sein, dass der erste Teilkörper und der zweite Teilkörper unterschiedliche Werkstoffe aufweisen. Durch die unterschiedlichen Werkstoffe kann insbesondere eine Gewichtsreduzierung des Verbundbauteils erreicht werden, da die mechanischen Anforderungen an die verschiedenen Abschnitte des Verbundbauteils unterschiedlich sein können. Durch den Einsatz unterschiedlicher Werkstoffe kann das Verbundbauteil somit gezielt an diese unterschiedlichen Anforderungen angepasst und hinsichtlich seines Gewichtes optimiert werden. Beispielsweise ist es möglich, verschiedene metallische Werkstoffe einzusetzen. Auch kann zumindest einer der Teilkörper eine Keramik aufweisen. Insgesamt wird somit eine große Gestaltungsfreiheit durch den Einsatz unterschiedlicher Werkstoffpaarungen möglich.

Zur Herstellung beispielsweise eines Kupplungsbauteiles ist es bevorzugt, dass an dem ersten Teilkörper neben dem hülsenförmigen Verbindungsabschnitt ein sich radial nach außen erstreckender, insbesondere scheibenförmiger, Radialabschnitt hergestellt wird. Der so gebildete erste Teilkörper mit dem ersten hülsenförmigen Verbindungsabschnitt und dem Radialabschnitt wird vorzugsweise als fertiges Rohteil vor der Anformung des zweiten Teilkörpers hergestellt. Hierdurch kann eine Nachbearbeitung des Verbundbauteils nach der Verbindung des ersten Teilkörpers mit dem zweiten Teilkörper weitgehend vermieden werden.

Zur Erzielung hochpräziser Abmessungen des Verbundbauteiles, insbesondere in axialer und radialer Richtung, kann es vorteilhaft sein, einen Ausgleichsbereich vorzusehen, in welchen gegebenenfalls überschüssiges Material des zweiten Teilkörpers fließen kann. Hierzu ist es bevorzugt, dass die Umformrolle mit einem definierten axialen Abstand zu dem Radialabschnitt des ersten Teilkörpers radial zugestellt wird. Die Umformrolle ist also um ein bestimmtes Maß von dem Radialabschnitt des ersten Teilkörpers beabstandet, und überschüssiges Material kann beim Andrücken des zweiten Teilkörpers an den ersten Teilkörper in einen so gebildeten Spalt zwischen der Umformrolle und dem Radialabschnitt des ersten Teilkörpers fließen. Eine weitere Bearbeitung des Verbundbauteils kann in beliebiger Weise erfolgen.

Zur Aufnahme von überschüssigem Material ist es weiterhin bevorzugt, dass in dem ersten Teilkörper, insbesondere in dessen Radialabschnitt, mindestens ein Ausgleichsbereich ausgebildet wird. Der Ausgleichsbereich kann insbesondere als eine Vielzahl von in Umfangsrichtung angeordneten Ausnehmungen in dem Radialabschnitt des ersten Teilkörpers ausgebildet werden. Vorzugsweise befinden sich diese Ausnehmungen in einem radial inneren Bereich des Radialabschnitts, so dass überschüssiges Material des zweiten Teilkörpers axial in den Ausgleichsbereich fließen kann und diesen zumindest teilweise ausfüllt. Die Ausnehmungen können beispielsweise als Sacklöcher ausgebildet sein.

Diese Ausgestaltung des Verfahrens ist insbesondere dann vorteilhaft, wenn in den zweiten Teilkörper eine Verzahnung eingebracht wird, die aufgrund einer unterschiedlichen benötigten Materialmenge zwischen der Verzahnung und den dazwischenliegenden Räumen zu einer wellenförmigen Kontur am axialen Rand des zweiten Teilkörpers führt. Diese Wellenkontur kann durch den Ausgleichsbereich in dem ersten Teilkörper kompensiert werden. Insbesondere können sich bildende Wellen in den Ausgleichsbereich hineinfließen und so zusätzlich zu einer verbesserten Sicherung in Umfangsrichtung und damit einem großen übertragbaren Drehmoment führen.

Eine weitere bevorzugte Ausführungsform hinsichtlich gegebenenfalls bestehenden überschüssigen Materials des zweiten Teilkörpers besteht darin, dass überschüssiges Material des zweiten Teilkörpers in einen axialen Außenbereich des Verbundbauteils fließt und dort anschließend mechanisch entfernt wird. Der axiale Außenbereich des Verbundbauteils ist insbesondere ein axialer Bereich, welcher dem ersten Teilkörper, insbesondere dessen Radialabschnitt, axial gegenüberliegt. Das Fließen des überschüssigen Materials in den axialen Außenbereich wird insbesondere durch einen axialen Anschlag auf der gegenüberliegenden Seite, also der Seite des Radialabschnitts, erzielt, welcher überschüssiges Material in den axialen Außenbereich zwingt. Durch einen radial nach innen vorstehenden Anschlagbereich oder Steg der Umformrolle kann der axiale Außenbereich, in welchen das überschüssige Material fließen soll, definiert hinsichtlich der radialen Anordnung festgelegt werden.

Zur Abdichtung des zweiten Teilkörpers gegenüber dem ersten Teilkörper kann es vorteilhaft sein, den zweiten Teilkörper mit einer Dichtungsfolie, Dichtungsmasse und/oder einem Dichtungskleber zu versehen. Das entsprechende Dichtungsmaterial wird vorzugsweise an den zweiten Teilkörper angebracht, bevor dieser durch die dargestellte Umformung an den ersten Teilkörper angeformt wird. Der zweite Teilkörper wird vorzugsweise ausschließlich an der sich bildenden Kontaktfläche zwischen erstem und zweitem Teilkörper mit dem genannten Dichtungsmaterial versehen. Nach der Einformung des zweiten Verbindungsabschnitts in den Hinterschnittbereich des ersten Verbindungsabschnitts sind alle Berührungsflächen zwischen erstem und zweitem Teilkörper durch das Dichtungsmaterial voneinander getrennt, so dass ein korrosionsfreier Verbund auf einfache Weise hergestellt werden kann.

Zur Abdichtung des ersten Teilkörpers gegenüber dem zweiten Teilkörper ist es weiterhin bevorzugt, dass der erste Teilkörper und/oder der zweite Teilkörper mit mindestens einer Nut versehen wird, in welche ein Dichtungselement eingebracht wird. Das Herstellen der Nut und Einbringen des Dichtungselements erfolgt vorzugsweise vor dem Zusammenfügen der ersten und zweiten Teilkörper.

Ein besonders effektives und präzises Herstellungsverfahren ist dadurch gegeben, dass der erste Teilkörper mit einer sich im Wesentlichen axial erstreckenden, ringförmigen Auskragung ausgebildet wird, welche als Anschlagring für den zweiten Teilkörper wirkt. Die Auskragung ist vorzugsweise an dem Radialabschnitt des ersten Teilkörpers gebildet und erstreckt sich in Richtung des anzuformenden zweiten Teilkörpers. Zwischen dem ersten hülsenförmigen Verbindungsabschnitt und der Auskragung ist somit ein ringförmiger Aufnahmebereich für den zweiten Teilkörper, insbesondere dessen Verbindungsabschnitt, gebildet. Dabei wird durch die Auskragung ein Aufbäumen des Materials des zweiten Teilkörpers in radialer Richtung nach außen verhindert.

Zur Fertigung bestimmter Bauteile kann es vorteilhaft sein, dass der erste und der zweite Teilkörper mittels eines Abstandhalters axial beabstandet voneinander angeordnet werden. Gleichwohl wird ein radiales Überdecken der hülsenförmigen Verbindungsabschnitte bereitgestellt. Das Einformen des zweiten hülsenförmigen Verbindungsabschnitts in den Hinterschnittbereich des ersten hülsenförmigen Verbindungsabschnitts erfolgt, wie oben beschrieben, durch radiales Zustellen der Umformrolle.

Eine weitere bevorzugte Ausführungsform der Erfindung besteht darin, dass ein sich im Wesentlichen radial erstreckender Außenbereich des zweiten Teilkörpers zu dem zweiten hülsenförmigen Verbindungsabschnitt umgeformt wird. Hierdurch ist es möglich, als Ausgangsform für den zweiten Teilkörper eine Form ohne einen hülsenförmigen Verbindungsabschnitt zu wählen. Die zweite in Ausgangsform des Teilkörpers kann insbesondere eine Ronde sein. Bevor die formschlüssige Verbindung zwischen dem ersten und dem zweiten Teilkörper hergestellt wird, wird durch span loses Umformen der Ronde der zweite hülsenförmige Verbindungsabschnitt hergestellt.

Die Herstellung des hülsenförmigen Verbindungsabschnitts kann insbesondere durch Umformung eines Außenbereichs des rondenförmigen zweiten Teilkörpers mittels einer Umformrolle erfolgen. Dies kann durch eine weitere Umformrolle, beispielsweise eine Drückwalzrolle in einem Drück- oder Drückwalzverfahren, oder durch dieselbe Umformrolle, mit welcher die Anformung an den ersten Teilkörper erfolgt, bewirkt werden. Im ersten Fall kann die Ausbildung des zweiten hülsenförmigen Verbindungsabschnitts im Wesentlichen durch ein Umlegen oder auch ein Drücken oder Drückwalzen des Außenbereichs der Ronde erfolgen. Im zweiten Fall wird der zweite hülsenförmige Verbindungsabschnitt durch radiales Stauchen und einen axialen Materialfluss hergestellt.

Die Erfindung wird nachfolgend anhand der beigefügten schematischen Zeichnungen weiter beschrieben. In diesen zeigen:
- Figuren 1 und 2: eine erste Ausführungsform des Herstellungsverfahrens;
- Fig. 3: eine zweite Ausführungsform des Herstellungsverfahrens;
- Fig. 4: eine dritte Ausführungsform des Herstellungsverfahrens;
- Fig. 5: eine Querschnittsansicht des in Fig. 4 dargestellten Verbundbauteils;
- Fig. 6: eine vierte Ausführungsform des Herstellungsverfahrens,;
- Fig. 7: eine fünfte Ausführungsform des Herstellungsverfahrens;
- Figuren 8 und 9: eine sechste Ausführungsform des Herstellungsverfahrens;
- Figuren 10 und 11: eine siebte Ausführungsform des Herstellungsverfahrens;
- Figuren 12 und 13: eine achte Ausführungsform des Herstellungsverfahrens,
- Figuren 14 bis 16: eine neunte Ausführungsform des Herstellungsverfahrens;
- Figuren 17 und 18: eine zehnte Ausführungsform des Herstellungsverfahrens,
- Figuren 19 und 20: eine elfte Ausführungsform des Herstellungsverfahrens;
- Fig. 21: eine Variante der elften Ausführungsform des Herstellungsverfahrens und
- Figuren 22 und 23: eine zwölfte Ausführungsform des Herstellungsverfahrens.

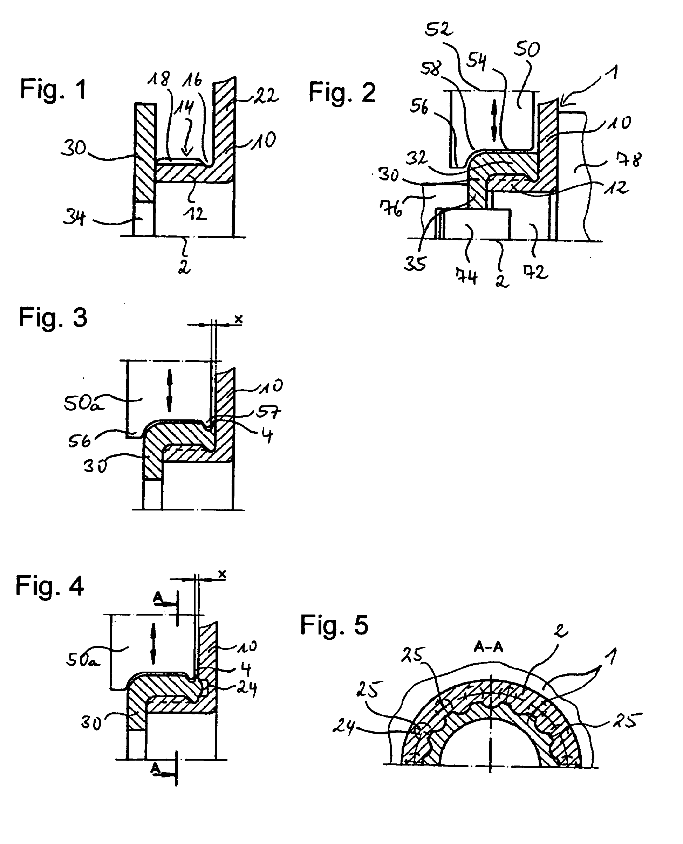

Figuren 1 und 2 zeigen eine erste Ausführungsform des erfindungsgemäßen Verfahrens zur Herstellung eines Verbundbauteils 1. Als Ausgangskörper werden ein erster Teilkörper 10 und ein zweiter Teilkörper 30 verwendet. Diese sind in Fig. 1 dargestellt. Der erste Teilkörper 10 kann beispielsweise ein Gussscheibenrohling sein. Er weist einen ersten hülsenförmigen Verbindungsabschnitt 12 und einen sich in radialer Richtung nach außen erstreckenden Radialabschnitt 22 auf.

Der zweite Teilkörper 30 ist als rondenförmiger Körper mit einer mittigen Durchgangsbohrung 34 ausgebildet und kann beispielsweise eine gelochte Aluminiumronde oder -scheibe sein. Die Bohrung 34 des zweiten Teilkörpers 30 hat einen kleineren Durchmesser als der erste hülsenförmige Verbindungsabschnitt 12 des ersten Teilkörpers 10.

Erster und zweiter Teilkörper 10, 30 werden auf einer Umformmaschine angeordnet, wobei der erste hülsenförmige Verbindungsabschnitt 12 um einen zentralen Aufnahmedorn 72 positioniert wird. Der zweite Teilkörper 30 wird um einen Zentrierzapfen 74 angeordnet, welcher koaxial zu dem Aufnahmedorn 72 ausgebildet ist und einen kleineren Durchmesser als dieser aufweist. Die Teilkörper 10, 30 werden durch einen spindelseitigen Aufnahmeflansch 78 und ein reitstockseitiges Andrückwerkzeug 76 mit dem Zentrierzapfen 74 axial aneinandergedrückt und in Rotation versetzt. Der zweite Teilkörper 30 kontaktiert dabei ein erstes axiales Ende des ersten hülsenförmigen Verbindungsabschnitts 12.

Zur Umformung des zweiten Teilkörpers 30 und Anformung an den ersten Teilkörper 10 weist die Umformmaschine eine Umformrolle 50 auf. Die Umformrolle 50 ist an ihrem Außenumfang mit einer Kammerung versehen, welche durch einen Anpressbereich 54 und einen radial nach außen vorstehenden Steg oder Stützabschnitt 56, welcher sich in einem äußeren Axialbereich der Umformrolle 50 befindet, gebildet ist. Der Anpressbereich 54 ist durch eine im Wesentlichen glatte Umfangsfläche der Umformrolle 50 gebildet und dient der Kontaktierung des Werkstücks. Der Stützabschnitt 56 ist ein ringförmiger, radial vorstehender Steg. Zwischen dem Anpressbereich 54 und dem Stützabschnitt 56 ist ein bogenförmiger Übergangsbereich 58 ausgebildet.

Der erste hülsenförmige Verbindungsabschnitt 12 des ersten Teilkörpers 10 weist einen Hinterschnittbereich 14 auf, welcher einerseits einen umlaufenden Hinterschnitt 16 und andererseits eine Profilverzahnung 18 mit einer Vielzahl gleichmäßig über den äußeren Umfang des ersten hülsenförmigen Verbindungsabschnitts 12 verteilter axialer Nuten und Vorsprünge aufweist. Die Profilverzahnung 18 kann auch als axiales Nutprofil bezeichnet werden. Der Hinterschnitt 16 ist als radial nach innen gerichtete Einkerbung ausgebildet und an einem dem ersten axialen Ende des Verbindungsabschnitt 12 gegenüberliegenden zweiten axialen Ende des ersten hülsenförmigen Verbindungsabschnitts 12 angeordnet.

In einem ersten Umformschritt wird ein Rondenrand beziehungsweise ein Außenbereich des rondenförmigen zweiten Teilkörpers 30 zu einem zweiten hülsenförmigen Verbindungsabschnitt 32 umgeformt. Hierzu wird die Umformrolle 50 mit der speziellen Kammerung ausschließlich radial zugestellt. Die Umformrolle 50 weist eine Drehachse 52 auf, die parallel zu einer Maschinenachse der Umformmaschine verläuft, die gleichsam eine Rotationsachse 2 des Verbundbauteils 1 beziehungsweise der Teilkörper 10, 30 ist.

Durch einen Profiliervorgang wird mittels der Umformrolle 50, die von außen nach innen ausschließlich radial zugestellt wird, eine entsprechende Länge des Rondenrandes des zweiten Teilkörpers 30 unter Materialverdickung flachgedrückt. Das Zustellen der Umformrolle 50 erfolgt derart, dass der Anpressbereich 54 sich im Wesentlichen über die gesamte axiale Länge des ersten und zweiten Verbindungsabschnitts 12, 32 erstreckt. Aufgrund der Kammerung der Umformrolle 50 ist ein Materialfluss nur in eine einzige axiale Richtung, nämlich in Richtung des ersten Teilkörpers 10, möglich. Ein Materialfluss in die entgegengesetzte axiale Richtung, also vom ersten Teilkörper 10 weg, wird durch den Steg oder Stützabschnitt 56 der Umformrolle 50 verhindert. Dieser dient als axialer Anschlag für den zweiten Verbindungsabschnitt 32 und verhindert einen axialen Materialfluss in die entsprechende Richtung.

Durch die Umformung erfolgt eine Verdickung des Rondenrandes und ein Materialfluss in radiale und axiale Richtung. Der verdickte Rondenrand des zweiten Teilkörpers 30 bildet den zweiten hülsenförmigen Verbindungsabschnitt 32, welcher in einem zweiten Umformschritt in den Hinterschnittbereich 14 des ersten hülsenförmigen Verbindungsabschnitts 12 eingeformt wird. Der zweite hülsenförmige Verbindungsabschnitt 32 füllt dabei die Profilverzahnung 18 des ersten Teilkörpers 10 in Umfangsrichtung gleichmäßig aus und fließt in axialer und radialer Richtung in den umlaufenden Hinterschnitt 16, der ebenfalls gleichmäßig ausgefüllt wird.

Durch den Stützabschnitt 56 der Umformrolle 50 und den Radialabschnitt 22 des ersten Teilkörpers 10 wird ein axiales Fließen des Werkstoffs des zweiten Teilkörpers 30 verhindert, so dass der zweite hülsenförmige Verbindungsabschnitt 32 unter Verdickung seiner Wandstärke radial an den ersten hülsenförmigen Verbindungsabschnitt 12 des ersten Teilkörpers 10 angedrückt wird. Durch die radiale Verdickung des zweiten hülsenförmigen Verbindungsabschnitts 32 wird das Material des zweiten hülsenförmigen Verbindungsabschnitts 32 zuverlässig in den Hinterschnittbereich 14 des ersten Teilkörpers 10 eingeformt.

Durch das ausschließlich radiale Zustellen der Umformrolle 50 wirken bei der Materialverdickung hauptsächlich Radialkräfte, die zu einer gleichmäßigen Werkstoffverteilung in der Profilverzahnung 18 und den umlaufenden Hinterschnitt 16 führen, die mit der Umformrolle 50 nicht mehr erreichbar ist. Außerdem wird durch das ausschließlich radiale Zustellen eine Oberflächenverfestigung des verdickten Rondenrandes (innen und außen) des zweiten Teilkörpers 30 erreicht, wodurch sich eine verbesserte Korrosionsbeständigkeit einstellt.

Ein weiterer Grundgedanke der Erfindung liegt auch darin, dass beim Einformen des Rondenrandes des zweiten Teilkörpers 30 in die Profilverzahnung 18 aufgrund der ausschließlich radialen Zustellung der Umformrolle 50 und der definierten radialen Druckkräfte eine erhöhte Innenspannung in einem Umfangsbereich der Profilverzahnung 18 erzeugt wird. Hierdurch wird erreicht, dass die Teilkörper 10, 30 mit einer radialen Vorspannung im Umfangsbereich der Profilverzahnung 18 drehfest, axialfest und spielfrei verbunden sind. Somit können große mechanische und/oder thermische Wechselbeanspruchungen an dem Verbundbauteil 1, welche zu einer Aufweitung der Verbindung führen könnten, aufgefangen und kompensiert werden. Es ist so auch unter extremen Betriebsbedingungen des Verbundbauteiles 1 eine zuverlässige drehfeste, axialfeste und spielfreie Verbindung der beiden Teilkörper 10, 30 sichergestellt.

Ein weiterer Grundgedanke der Erfindung kann auch darin gesehen werden, dass der erste Teilkörper 10 einen sich radial nach außen erstreckenden Radialabschnitt 22 und der zweite Teilkörper 30 einen sich nach innen radial erstreckend Radialabschnitt 35 aufweist, der aus einem inneren Rondenabschnitt hervorgeht. Der zweite Teilkörper 30 mit dem nach innen gerichteten Radialabschnitt 35 wird radial von außen an den ersten Teilkörper 10, insbesondere dessen Verbindungsabschnitt 12, angeformt.

Aufgrund möglicher Toleranz- sowie Konzentrizitätsunterschiede der Teilkörper 10 und 30 kann es notwendig sein, die Teilkörper 10, 30 vor der Verbindung mechanisch zu bearbeiten. Gleichwohl kann es vorteilhaft sein, dass überschüssiges Material in sogenannte Materialausgleichsräume fließen kann. Hierzu sind eine Vielzahl von Möglichkeiten denkbar, von welchen bevorzugte Ausführungsformen im Zusammenhang mit den Figuren 3 bis 6 beschrieben werden.

Eine zweite Ausführungsform des erfindungsgemäßen Verfahrens zur Herstellung eines Verbundbauteils 1 ist in Fig. 3 dargestellt. Ausgangskörper können ein erster Teilkörper 10 und ein zweiter Teilkörper 30 sein, wie sie in Fig. 1 dargestellt sind. Der zweite Teilkörper 30 kann aber auch bereits einen fertig ausgebildeten zweiten hülsenförmigen Verbindungsabschnitt 32 aufweisen. Im Unterschied zu dem in Fig. 2 dargestellten Verfahren erfolgt das Andrücken des zweiten hülsenförmigen Verbindungsabschnitts 32 an den ersten hülsenförmigen Verbindungsabschnitt 12 mittels einer Umformrolle 50a, welche gegenüber der Umformrolle 50 nach Fig. 2 eine veränderte Geometrie aufweist. Die Umformrolle 50a weist an dem dem Stützabschnitt 56 gegenüberliegenden axialen Ende eine umlaufende Profilnase 57 auf, welche sich radial von dem Anpressbereich 54 nach außen erstreckt. Durch die Profilnase 57 wird der zweite hülsenförmige Verbindungsabschnitt 32 in Richtung des umlaufenden Hinterschnitts 16 gedrückt und fließt in diesen hinein. Bei weiterer radialer Zustellung der Umformrolle 50a wird der umlaufende Hinterschnitt 16 vollständig ausgefüllt. Somit wird eine sichere axiale Fixierung des zweiten Teilkörpers 30 an dem ersten Teilkörper 10 erreicht.

Weiterhin ist die Umformrolle 50a um einen Betrag x von dem ersten Teilkörper 10, insbesondere dessen Radialabschnitt 22, beabstandet. Hierdurch kann überschüssiges Material des zweiten Teilkörpers 30 beim Andrücken in einen Spalt 4 zwischen dem ersten Teilkörper 10 und der Umfangsrolle 50a, insbesondere zwischen dem Radialabschnitt 22 des ersten Teilkörpers 10 und einer axialen Außenfläche der Umfangsrolle 50a fließen. Eine weitere Bearbeitung des Verbundbauteils 1 kann in beliebiger Weise folgen.

Figuren 4 und 5 zeigen eine dritte Ausführungsform des erfindungsgemäßen Verfahrens zur Herstellung eines Verbundbauteils 1. Hintergrund dieser Ausführungsform ist die Ausbildung einer wellenförmigen Kontur an einem axialen Ende eines Bauteils, wenn in dieses eine axiale Verzahnung eingebracht wird, wie dies zum Beispiel zur Herstellung eines Kupplungslamellenträgers erfolgt. Es ist allgemein bekannt, dass sich bei der Herstellung zum Beispiel eines solchen Kupplungslamellenträgers aus einer Ronde oder Vorform durch Drücken/Drückwalzen am Öffnungsdurchmesser des zylindrischen Teiles aufgrund der unterschiedlichen Materialverteilung ein wellenförmiger Rand bildet. Für die Herstellung der Verzahnung wird mehr Material benötigt als für die Zwischenräume zwischen der Verzahnung. Im Öffnungsbereich der Verzahnung bildet sich ein Wellental und im Öffnungsbereich der Zwischenräume bildet sich ein Wellenhoch.

Um diese unerwünschte Wellenkontur auszugleichen, wird in den ersten Teilkörper 10, insbesondere in dessen Radialabschnitt 22, ein Ausgleichsbereich 24 eingeformt. Der Ausgleichsbereich 24 weist eine Vielzahl von Ausnehmungen 25 auf, welche beispielsweise als Sackbohrungen ausgeführt sein können. Das überschüssige Material eines Wellenhochs kann in diese Ausnehmungen 25 fließen, wodurch eine weitere Steigerung des zu übertragenden Drehmoments erreicht wird. Weiteres überschüssiges Material kann beim Andrücken des zweiten hülsenförmigen Verbindungsabschnitts 32 an den ersten hülsenförmigen Verbindungsabschnitt 12 in den Spalt 4 fließen. Eine weitere Bearbeitung des Verbundbauteils 1 kann in beliebiger Weise folgen.

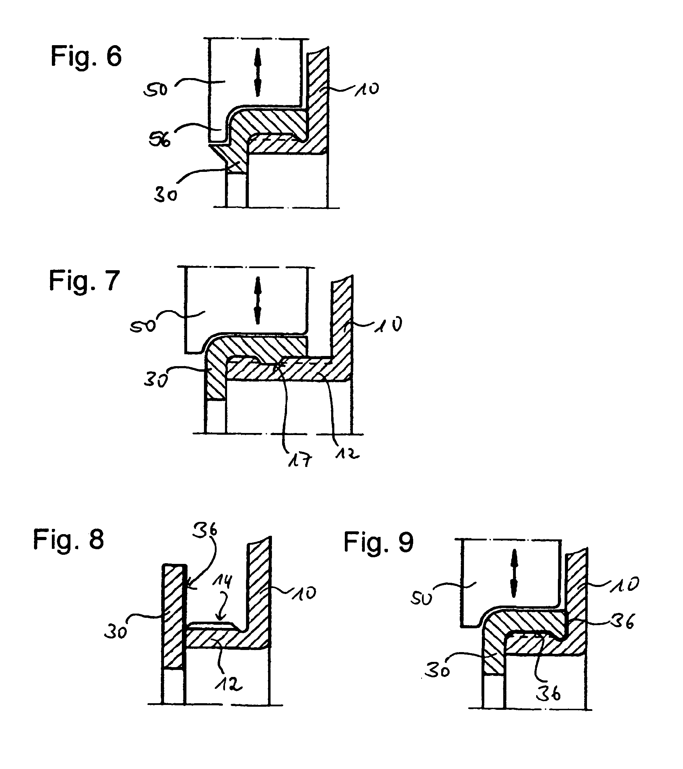

Fig. 6 zeigt eine vierte Ausführungsform zur Herstellung eines Verbundbauteils 1. Im Unterschied zu den vorherigen Verfahren wird die Umformrolle 50 im Wesentlichen ohne axialen Abstand zu dem Radialabschnitt 22 des ersten Teilkörpers 10 zugestellt. Überschüssiges Material des zweiten Teilkörpers 30 kann somit nicht oder nur sehr geringfügig in einen entsprechenden Spalt fließen. Auf der gegenüberliegenden axialen Seite des zweiten Teilkörpers 30 ist ein axialer Materialfluss durch den Stützabschnitt 56 der Umformrolle 50 begrenzt. Nach Ausfüllen aller Hinterschnitte des ersten Teilkörpers 10 kann Material des zweiten Teilkörpers 30 bei weiterer radialer Zustellung der Umformrolle 50 somit lediglich in einen axialen Außenbereich fließen, welcher sich radial innerhalb des Stützabschnitts 56 der Umformrolle 50 befindet. Das überschüssige Rondenmaterial des zweiten Teilkörpers 30 fließt somit beim Andrücken und Verdicken über den Steg oder Stützabschnitt 56 der Umformrolle 50 nach außen und kann dort anschließend mechanisch entfernt werden. Eine weitere Bearbeitung des Verbundbauteils 1 kann in beliebiger Weise folgen.

Eine fünfte Ausführungsform des erfindungsgemäßen Verfahrens ist in Fig. 7 dargestellt. Bei diesem Ausführungsbeispiel ist in dem ersten hülsenförmigen Verbindungsabschnitt 12 des ersten Teilkörpers 10 in beliebiger axialer Position eine Ausnehmung, insbesondere eine umlaufende Nut 17, vorgesehen, um die Teilkörper 10, 30 gegen axiale Verschiebung zu sichern. Eine weitere Bearbeitung des Verbundbauteils kann in beliebiger Weise folgen.

Figuren 8 und 9 zeigen eine weitere Ausführungsform des Verfahrens. Bei diesem Ausführungsbeispiel wird der zweite Teilkörper 30 von einer Seite vollflächig mit einer Dichtungsfolie 36 beklebt. Anschließend werden die Teilkörper 10, 30 durch ein Aufnahmewerkzeug axial zusammengepresst.

Durch den Umform- beziehungsweise Profiliervorgang mittels der Umformrolle 50, die ausschließlich von außen nach innen radial zugestellt wird, wird ein Außenbereich des zweiten Teilkörpers 30, insbesondere ein Rondenrand, mit der Dichtungsfolie 36 unter Materialverdickung flachgedrückt und an den ersten Teilkörper 10 angedrückt. Dabei füllt der verdickte Rondenrand des zweiten Teilkörpers 30 mit der Dichtungsfolie 36 den Bereich der Profilverzahnung 18, den umlaufenden Hinterschnitt 16 und einen Teilbereich des Radialabschnitts 22 zunächst mit der Dichtungsfolie 36 und anschließend mit dem Rondenmaterial aus, so dass die Dichtungsfolie 36 an allen Kontaktflächen zwischen dem ersten und zweiten Teilkörper 10, 30 vorhanden ist. Ein korrosionsfreier Verbund ist so auf einfache Weise hergestellt. Alternativ kann auch eine geeignete Menge Dichtungskleber oder eine Dichtungsmasse auf einen der beiden Teilkörper 10, 30 aufgetragen werden, bevor diese miteinander verbunden werden. Eine weitere Bearbeitung des Verbundbauteils 1 kann in beliebiger Weise folgen.

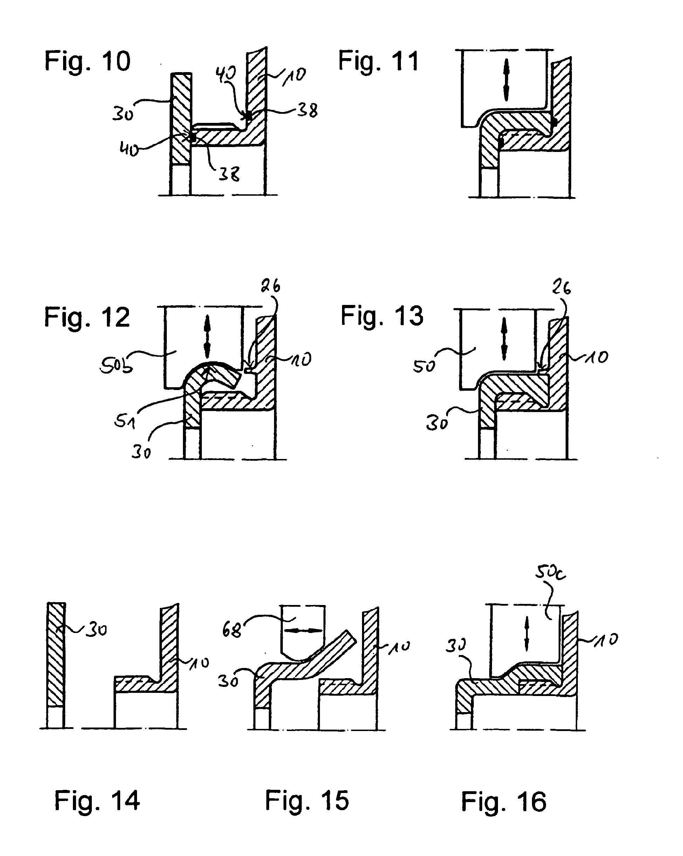

Figuren 10 und 11 zeigen eine siebte Ausführungsform des erfindungsgemäßen Verfahrens. Bei diesem Ausführungsbeispiel ist der erste Teilkörper 10 mit mindestens einer ringförmigen Nut 38 versehen, in welche ein vorzugsweise temperaturbeständiges Dichtungselement 40, insbesondere ein O-Ring und/oder eine Dichtungsscheibe, eingelegt ist. Der Verbund der Teilkörper 10, 30 ist so ausgelegt, dass das Dichtungselement 40 axial zusammengepresst wird, um eine zuverlässige Dichtheit zu gewährleisten. Die Nut 38 befindet sich vorzugsweise an einer axialen Stirnfläche des ersten Verbindungsabschnitts 12 und/oder an einer axialen Stirnfläche des Radialabschnitts 22. Es können auch mehrere Nuten 38 mit Dichtungselementen 40 vorgesehen sein. Alternativ kann auch in den zweiten Teilkörper 30 mindestens eine Nut mit einem Dichtungselement eingebracht werden. Eine weitere Bearbeitung des Verbundbauteils 1 kann in beliebiger Weise folgen.

Eine achte Ausführungsform des erfindungsgemäßen Verfahrens ist in Figuren 12 und 13 dargestellt. An dem Radialabschnitt 22 des ersten Teilkörpers 10 wird ein Anschlagring 26 angeformt, welcher sich in Richtung des ersten hülsenförmigen Verbindungsabschnitts 12 parallel zu diesem erstreckt. Durch den Anschlagring 26 an dem ersten Teilkörper 10 wird eine Materialaufbäumung des zweiten Teilkörpers 30 auch bei großer Beanspruchung des Verbundbauteils 1 verhindert. Der zweite Teilkörper 30 wird fest von dem Anschlagring 26 eingespannt. Vorzugsweise erfolgt die Umformung des zweiten Teilkörpers 30 in zwei Schritten, wobei zunächst eine erste Umformrolle 50b eingesetzt wird, die eine umlaufende rinnenförmige Vertiefung 51 aufweist, um einen Rondenaußenbereich des zweiten Teilkörpers 30 zu dem zweiten hülsenförmigen Verbindungsabschnitt 32 umzuformen. Dabei wird eine entsprechende Länge des Rondenrandes des zweiten Teilkörpers 30 durch die Umformrolle 50b in eine gebogene Form umgeformt. Am Ende dieses Umformschritts befindet sich der Rondenrand axial beabstandet von dem Anschlagring 26.

Anschließend wird mittels der Umformrolle 50 der zweite hülsenförmige Verbindungsabschnitt 32 an den ersten hülsenförmigen Verbindungsabschnitt 12 angeformt. Dabei presst sich zunächst Material des zweiten Teilkörpers 30 gegen eine Unterkante des Anschlagrings 26. Weiteres überschüssiges Material wird zwischen der Umformrolle 50 und dem Anschlagring 26 aufsteigen. Eine weitere Bearbeitung des Verbundbauteils 1 kann in beliebiger Weise folgen.

Eine neunte Ausführungsform des erfindungsgemäßen Verfahrens ist in den Figuren 14 bis 16 dargestellt. Die Teilkörper 10, 30 werden durch ein Aufnahmewerkzeug beabstandet voneinander aufgenommen und durch vorzugsweise axiale Spannkräfte gegen Verdrehen gehalten.

In einem ersten Verfahrensschritt, welcher in Fig. 15 dargestellt ist, wird eine bestimmte Länge des Rondenrandes des zweiten Teilkörpers 30 mittels einer Drückwalzrolle 68 umgebogen und ein Teilbereich als zylindrischer Hohlkörper abgestreckt und/oder ungeformt.

In einem zweiten Verfahrensschritt, welcher in Fig. 16 dargestellt ist, wird durch radiales Zustellen einer Umformrolle 50c das Verbundbauteil 1 in analoger Weise zu den vorher beschriebenen Ausführungsformen hergestellt. Dabei dient vorzugsweise der gesamte Außenumfang der Umformrolle 50c als Anpressbereich und ist entsprechend einer gewünschten Außenkontur des zweiten Verbindungsabschnitts 32 geformt, wobei eine zusätzliche axiale Abstützung des zweiten Teilkörpers 30 durch ein Andrückwerkzeug erfolgen kann. Eine weitere Bearbeitung des Verbundbauteils 1 kann in beliebiger Weise folgen.

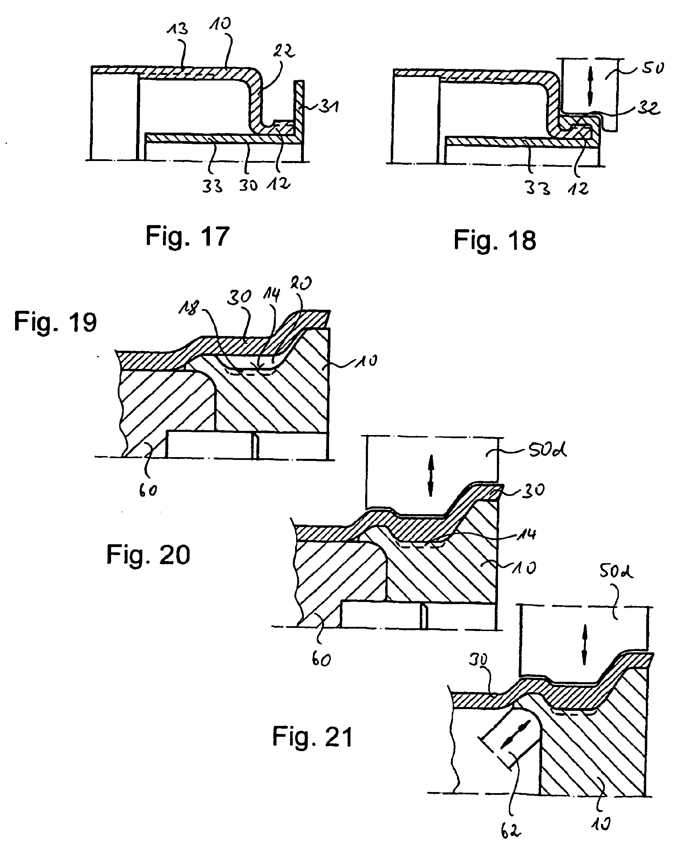

Figuren 17 und 18 zeigen eine zehnte Ausführungsform des erfindungsgemäßen Verfahrens. Die Teilkörper 10, 30 werden durch ein Aufnahmewerkzeug aufgenommen und durch vorzugsweise axiale Spannkräfte gegen Verdrehen gehalten. Im Unterschied zu den vorher beschriebenen Verfahren weist der erste Teilkörper 10 neben dem ersten hülsenförmigen Verbindungsabschnitt 12 und dem Radialabschnitt 22 einen zweiten hülsenförmigen Abschnitt 13 auf. Der zweite Teilkörper 30 weist neben einem rondenförmigen Abschnitt 31 ebenfalls einen hülsenförmigen Abschnitt 33 auf, welcher innerhalb des ersten hülsenförmigen Verbindungsabschnitts 12 des ersten Teilkörpers 10 angeordnet ist. Durch Umformung des rondenförmigen Abschnitts 31 zu dem zweiten hülsenförmigen Verbindungsabschnitt 32 und Anformen des zweiten hülsenförmigen Verbindungsabschnitts 32 an den ersten hülsenförmigen Verbindungsabschnitt 12 wird letzterer zwischen dem zweiten hülsenförmigen Verbindungsabschnitt 32 und dem weiteren hülsenförmigen Abschnitt 33 eingeklemmt. Hierdurch kann in besonders vorteilhafter Weise ein Verbundgetriebebauteil hergestellt werden.

Eine weitere Ausführungsform des Verfahrens ist in den Figuren 19 und 20 dargestellt. Diese zeigen die Herstellung einer Verbundfelge.

Es ist bekannt, einen Radkörper mit einer Felge zu verschweißen.

Bei diesem Ausführungsbeispiel bildet der zweite Teilkörper 30 eine Felge, beispielsweise aus Stahl, und der erste Teilkörper 10 einen Radkörper, beispielsweise einen gegossenen oder geschmiedeten Aluminiumstern. In diesen wird ein Hinterschnittbereich 14, zum Beispiel eine Profilverzahnung 18 eingebracht. Der zweite Teilkörper 30 ist eine Felgenvorform, zum Beispiel ein aus einem Blechstreifen zusammengeschweißter Hohlkörper. Ein Felgenbett der Felge kann bis auf einen äußeren Felgenhornbereich fertig hergestellt sein.

Die Felge und der Radkörper werden durch ein Aufnahmewerkzeug aufgenommen und gegen Verdrehen gehalten. Durch radiales Zustellen einer Umformrolle 50d wird die Felge im Bereich des Felgenhorns an den Radkörper, insbesondere den dort gebildeten Hinterschnittbereich 14, angeformt. Im vorliegenden Beispiel ist der Hinterschnittbereich 14 einerseits durch die Profilverzahnung 18 und andererseits durch eine ringförmige Ausnehmung 20, in welcher die Profilverzahnung 18 aufgenommen ist, in dem Radkörper gebildet.

Eine weitere Bearbeitung der Verbundfelge kann in beliebiger Weise erfolgen.

Ein sich an den äußeren Felgenhornbereich anschließender Axialbereich der Felge sowie der Radkörper können durch ein Aufnahmewerkzeug 60, wie in Figuren 19 und 20 dargestellt, gehalten werden. Weiterhin ist es auch möglich, einen radialen inneren Bereich des Radkörpers durch eine Stützrolle 62, wie in Fig. 21 dargestellt, zu halten.

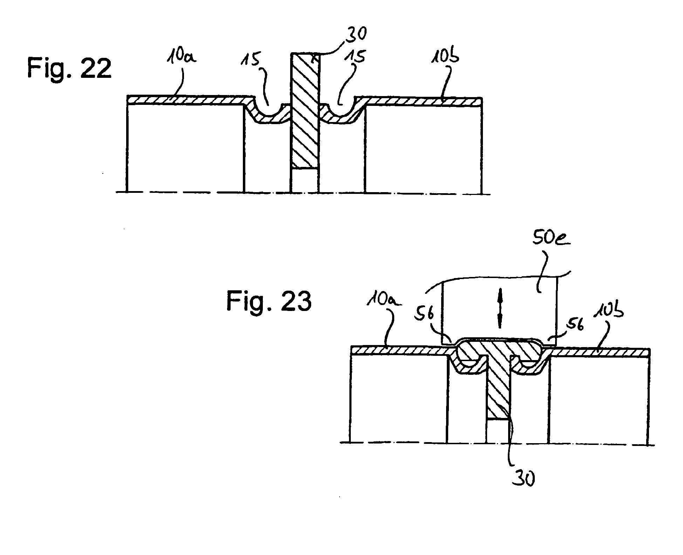

Eine zwölfte Ausführungsform des erfindungsgemäßen Verfahrens ist in den Figuren 22 und 23 gezeigt. Bei diesem Ausführungsbeispiel sind zwei erste Teilkörper 10a und 10b vorgesehen, welche mit einem zweiten Teilkörper 30 formschlüssig verbunden werden. Die ersten Teilkörper 10a, 10b sind beispielsweise Felgenhälftenvorformen. Diese können aus unterschiedlichen Werkstoffen bestehen und in ihrer Formgestaltung unterschiedlich sein. Die ersten Teilkörper 10a, 10b weisen an einem axialen Ende jeweils als Hinterschnittbereich 14 eine umlaufende Sicke 15 auf. Diese Sicken 15 können beispielsweise durch einen Drückvorgang hergestellt werden.

Als zweiter Teilkörper 30 kann beispielsweise eine gelochte Ronde, zum Beispiel aus Stahl oder Aluminium, oder ein Radkörper eingesetzt werden.

Die Teilkörper 10a, 10b und 30 werden durch ein Aufnahmewerkzeug aufgenommen und gegen Verdrehen gehalten.

Durch Zustellung einer Umformrolle 50e wird ein Außenumfang des zweiten Teilkörpers 30 bzw. ein Rondenrand flachgedrückt. Dabei erfolgt ein Materialfluss in radialer Richtung nach innen und in axialer Richtung zu beiden Seiten. Durch weiteres Zustellen der Umformrolle 50e wird in bekannter Weise das Verbundbauteil 1 hergestellt.

Zur Begrenzung des axialen Materialflusses und radialen Verdickung des zweiten Teilkörpers 30 dient einerseits eine Kammerung der Umformrolle 50e mit zwei an dessen axialen Enden angeordneten Stützabschnitten 56 und andererseits die jeweils in den ersten Teilkörpern 10a, 10b ausgebildete Sicke 15. Der axiale Anschlag wird also an zwei axialen Seiten jeweils sowohl durch den ersten Teilkörper 10a, 10b selbst als auch durch den Stützabschnitt 56 der Umformrolle 50e gebildet.

Eine weitere Bearbeitung einer durch den dargestellten Verbund hergestellten mehrteiligen Felge kann in beliebiger Weise folgen.

Durch das erfindungsgemäße Verfahren kann auf besonders wirtschaftliche Weise ein Verbundbauteil für verschiedenste Anwendungsmöglichkeiten hergestellt werden.

## Patentansprüche

1. Verfahren zum Herstellen eines rotationssymmetrischen Verbundbauteiles, welches aus mindestens einem ersten Teilkörper (10) und mindestens einem zweiten Teilkörper (30) durch formschlüssige Verbindung hergestellt wird, wobei das formschlüssige Verbinden durch spanloses Umformen auf einer Umformmaschine erfolgt, und wobei ein erster hülsenförmiger Verbindungsabschnitt (12) des ersten Teilkörpers (10) und ein zweiter hülsenförmiger Verbindungsabschnitt (32) des zweiten Teilkörpers (30) radial überdeckend zueinander angeordnet werden,
**dadurch gekennzeichnet,**
**dass** der erste hülsenförmige Verbindungsabschnitt (12) mit einem in Axial- und Umfangsrichtung ausgebildeten Hinterschnittbereich (14) versehen wird, in welchen der zweite hülsenförmige Verbindungsabschnitt (32) zum Bilden der formschlüssigen Verbindung durch ausschließlich radiales Zustellen mindestens einer Umformrolle (50) eingeformt wird, wobei der zweite hülsenförmige Verbindungsabschnitt (32) zumindest bereichsweise radial verdickt wird.

2. Verfahren nach Anspruch 1,
**dadurch gekennzeichnet,**
**dass** eine Rotationsachse (52) der Umformrolle (50) parallel zu einer Rotationsachse (2) des Verbundbauteiles (1) ist.

3. Verfahren nach Anspruch 1 oder 2 ,
**dadurch gekennzeichnet,**
**dass** der Hinterschnittbereich (14) des ersten hülsenförmigen Verbindungsabschnitts (12) mindestens einen Hinterschnitt in Axialrichtung und einen Hinterschnitt in Umfangsrichtung aufweist.

4. Verfahren nach einem der Ansprüche 1 bis 3,
**dadurch gekennzeichnet,**
**dass** der erste Teilkörper (10) und der zweite Teilkörper (30) unterschiedliche Werkstoffe aufweisen.

5. Verfahren nach einem der Ansprüche 1 bis 4,
**dadurch gekennzeichnet,**
**dass** an dem ersten Teilkörper (10) neben dem ersten hülsenförmigen Verbindungsabschnitt (12) ein sich radial nach außen erstreckender, insbesondere scheibenförmiger, Radialabschnitt (22) hergestellt wird.

6. Verfahren nach Anspruche 5,
**dadurch gekennzeichnet,**
**dass** die Umformrolle (50) mit einem definierten axialen Abstand (x) zu dem Radialabschnitt (22) des ersten Teilkörpers (10) radial zugestellt wird.

7. Verfahren nach einem der Ansprüche 1 bis 6,
**dadurch gekennzeichnet,**
**dass** in dem ersten Teilkörper (10) mindestens ein Ausgleichsbereich (24), insbesondere in dessen Radialabschnitt (22), zur Aufnahme von überschüssigem Material des zweiten Teilkörpers (30) ausgebildet wird.

8. Verfahren nach einem der Ansprüche 1 bis 7,
**dadurch gekennzeichnet,**
**dass** überschüssiges Material des zweiten Teilkörpers (30) in einen axialen Außenbereich des Verbundbauteils (1) fließt und dort anschließend mechanisch entfernt wird.

9. Verfahren nach einem der Ansprüche 1 bis 8,
**dadurch gekennzeichnet,**
**dass** der zweite Teilkörper (30) mit einer Dichtungsfolie (36), Dichtungsmasse und/oder einem Dichtungskleber versehen wird.

10. Verfahren nach einem der Ansprüche 1 bis 9,
**dadurch gekennzeichnet,**
**dass** der erste Teilkörper (10) und/oder der zweite Teilkörper (30) mit mindestens einer Nut (38) versehen wird, in welche ein Dichtungselement (40) eingebracht wird.

11. Verfahren nach einem der Ansprüche 1 bis 10,
**dadurch gekennzeichnet,**
**dass** der erste Teilkörper (10) mit einer sich im Wesentlichen axial erstreckenden, ringförmigen Auskragung ausgebildet wird, welche als Anschlagring (26) für den zweiten Teilkörper (30) wirkt.

12. Verfahren nach einem der Ansprüche 1 bis 11,
**dadurch gekennzeichnet,**
**dass** der erste und der zweite Teilkörper (10, 30) mittels eines Abstandhalters axial beabstandet voneinander angeordnet werden.

13. Verfahren nach einem der Ansprüche 1 bis 12,
**dadurch gekennzeichnet,**
**dass** ein sich im Wesentlichen radial erstreckender Außenbereich des zweiten Teilkörpers (30) zu dem zweiten hülsenförmigen Verbindungsabschnitt (32) umgeformt wird.

14. Rotationssymmetrisches Verbundbauteil, insbesondere hergestellt mit einem Verfahren nach einem der Ansprüche 1 bis 13,
mit mindestens einem ersten Teilkörper (10) und mindestens einem zweiten Teilkörper (30), welche formschlüssig miteinander verbunden sind,
wobei ein erster hülsenförmiger Verbindungsabschnitt (12) des ersten Teilkörpers (10) und ein zweiter hülsenförmiger Verbindungsabschnitt (32) des zweiten Teilkörpers (30) radial überdeckend zueinander angeordnet sind,
**dadurch gekennzeichnet,**
**dass** der erste hülsenförmige Verbindungsabschnitt (12) einen in Axial- und Umfangrichtung ausgebildeten Hinterschnittbereich (14) aufweist, in welchen der zweite hülsenförmige Verbindungsabschnitt (32) zum Bilden der formschlüssigen Verbindung durch ausschließlich radiales Zustellen mindestens einer Umformrolle (50) eingeformt ist, wobei der zweite hülsenförmige Verbindungsabschnitt (32) zumindest bereichsweise radial verdickt ist, und
**dass** der erste Teilkörper (10) einen sich radial nach außen erstreckenden Radialabschnitt (22) aufweist, in welchem ein Ausgleichsbereich (24) zur Aufnahme von überschüssigem Material des zweiten Teilkörpers (20) ausgebildet ist.

## Claims

1. Method for producing a rotationally symmetrical composite component, which is produced from at least one first partial body (10) and at least one second partial body (30) through a positive connection, with the positive connection being effected through chipless forming on a forming machine, and with a first sleeve-shaped connecting section (12) of the first partial body (10) and a second sleeve-shaped connecting section (32) of the second partial body (30) being arranged in a radially overlapping manner to each other,
**characterized in that**
the first sleeve-shaped connecting section (12) is provided with an undercut area (14) designed in the axial and circumferential direction, into which, for the purpose of establishing the positive connection, the second sleeve-shaped connecting section (32) is formed through exclusive radial feeding of at least one forming roller (50), with the second sleeve-shaped connecting section (32) being thickened radially at least in some areas.

2. Method according to claim 1,
**characterized in that**
an axis of rotation (52) of the forming roller (50) is parallel to an axis of rotation (2) of the composite component (1).

3. Method according to claim 1 or 2,
**characterized in that**
the undercut area (14) of the first sleeve-shaped connecting section (12) has at least one undercut in the axial direction and one undercut in the circumferential direction.

4. Method according to any one of claims 1 to 3,
**characterized in that**
the first partial body (10) and the second partial body (30) have different materials.

5. Method according to any one of claims 1 to 4,
**characterized in that**
on the first partial body (10) next to the first sleeve-shaped connecting section (12) a radially outward extending, in particular a disk-shaped radial section (22) is produced.

6. Method according to claim 5,
**characterized in that**
the forming roller (50) is fed radially with a defined axial distance (x) to the radial section (22) of the first partial body (10).

7. Method according to any one of claims 1 to 6,
**characterized in that**
in the first partial body (10), in particular in its radial section (22), at least one compensating area (24) is designed for receiving excess material of the second partial body (30).

8. Method according to any one of claims 1 to 7,
**characterized in that**
excess material of the second partial body (30) flows to an axial outer area of the composite component (1) where it is subsequently mechanically removed.

9. Method according to any one of claims 1 to 8,
**characterized in that**
the second partial body (30) is provided with a sealing film (36), a sealing compound and/or a sealing adhesive.

10. Method according to any one of claims 1 to 9,
**characterized in that**
the first partial body (10) and/or the second partial body (30) is provided with at least one groove (38), into which a sealing element (40) is introduced.

11. Method according to any one of claims 1 to 10,
**characterized in that**
the first partial body (10) is designed with a ring-shaped projection extending substantially in the axial direction, which functions as a stop ring (26) for the second partial body (30).

12. Method according to any one of claims 1 to 11,
**characterized in that**
by means of a spacer the first and the second partial body (10, 30) are arranged by being axially spaced from each other.

13. Method according to any one of claims 1 to 12,
**characterized in that**
a substantially radially extending outer area of the second partial body (30) is formed into the second sleeve-shaped connecting section (32).

14. Rotationally symmetrical composite component, in particular produced with a method according to any one of claims 1 to 13,
having at least one first partial body (10) and at least one second partial body (30) which are positively connected to each other,
with a first sleeve-shaped connecting section (12) of the first partial body (10) and a second sleeve-shaped connecting section (32) of the second partial body (30) being arranged in a radially overlapping manner to each other, **characterized in that**
the first sleeve-shaped connecting section (12) has an undercut area (14) designed in the axial and circumferential direction, into which, for the purpose of establishing the positive connection, the second sleeve-shaped connecting section (32) is formed through exclusive radial feeding of at least one forming roller (50), with the second sleeve-shaped connecting section (32) being thickened radially at least in some areas, and
**in that** the first partial body (10) has a radially outward extending radial section (22), in which a compensating area (24) is designed for receiving excess material of the second partial body (20).

## Revendications

1. Procédé de fabrication d'un composant assemblé à symétrie de rotation, qui est fabriqué à partir d'au moins un premier corps partiel (10) et au moins un deuxième corps partiel (30) par assemblage à engagement positif, dans lequel l'assemblage à engagement positif s'effectue par formage sans enlèvement de copeau sur une machine de formage, et dans lequel une première section de liaison (12) en forme de douille du premier corps partiel (10) et une deuxième section de liaison (32) en forme de douille du deuxième corps partiel (30) sont disposées en recouvrement radial l'une par rapport à l'autre, **caractérisé en ce que**
la première section de liaison (12) en forme de douille est munie d'une zone de contre-dépouille (14) réalisée dans les directions axiale et circonférentielle, dans laquelle la deuxième section de liaison (32) en forme de douille est engagée pour établir l'assemblage à engagement positif par approche exclusivement radiale d'au moins un cylindre de formage (50), dans lequel la deuxième section de liaison (32) en forme de douille est épaissie radialement au moins dans certaines zones.

2. Procédé selon la revendication 1, **caractérisé en ce qu'**un axe de rotation (52) du cylindre de formage (50) est parallèle à un axe de rotation (2) du composant assemblé (1).

3. Procédé selon la revendication 1 ou 2, **caractérisé en ce que** la zone de contre-dépouille (14) de la première section de liaison (12) en forme de douille présente au moins une contre-dépouille dans la direction axiale et une contre-dépouille dans la direction circonférentielle.

4. Procédé selon l'une des revendications 1 à 3, **caractérisé en ce que** le premier corps partiel (10) et le deuxième corps partiel (30) présentent des matériaux différents.

5. Procédé selon l'une des revendications 1 à 4, **caractérisé en ce que** sur le premier corps partiel (10) est fabriqué, à côté de la première section de liaison (12) en forme de douille, une section radiale (22) s'étendant radialement vers l'extérieur, en particulier en forme de disque.

6. Procédé selon la revendication 5, **caractérisé en ce que** le cylindre de formage (50) est approché radialement à une distance axiale (x) définie de la section radiale (22) du premier corps partiel (10).

7. Procédé selon l'une des revendications 1 à 6, **caractérisé en ce que** dans le premier corps partiel (10) est formée au moins une zone de compensation (24), en particulier dans sa section radiale (22), pour recevoir l'excédent de matière du deuxième corps partiel (30).

8. Procédé selon l'une des revendications 1 à 7, **caractérisé en ce que** l'excédent de matière du deuxième corps partiel (30) s'écoule dans une zone extérieure axiale du composant assemblé (1) et y est ensuite retiré mécaniquement.

9. Procédé selon l'une des revendications 1 à 8, **caractérisé en ce que** le deuxième corps partiel (30) est muni d'un feuille d'étanchéité (36), d'un mastic d'étanchéité et/ou d'un adhésif d'étanchéité.

10. Procédé selon l'une des revendications 1 à 9, **caractérisé en ce que** le premier corps partiel (10) et/ou le deuxième corps partiel (30) est muni d'au moins une rainure (38) dans laquelle est inséré un élément d'étanchéité (40).

11. Procédé selon l'une des revendications 1 à 10, **caractérisé en ce que** le premier corps partiel (10) est réalisé avec un collet annulaire s'étendant pour l'essentiel axialement, qui sert de bague de butée (26) pour le deuxième corps partiel (30).

12. Procédé selon l'une des revendications 1 à 11, **caractérisé en ce que** le premier et le deuxième corps partiels (10, 30) sont placés à distance axiale l'un de l'autre au moyen d'un élément d'écartement.

13. Procédé selon l'une des revendications 1 à 12, **caractérisé en ce qu'**une zone extérieure du deuxième corps partiel (30) s'étendant sensiblement radialement est façonnée pour produire la deuxième section de jonction (32) en forme de douille.

14. Composant assemblé à symétrie de rotation, en particulier fabriqué par un procédé selon l'une des revendications 1 à 13,
comportant au moins un premier corps partiel (10) et au moins un deuxième corps partiel (30), lesquels sont assemblés par engagement positif,
dans lequel une première section de liaison (12) en forme de douille du premier corps partiel (10) et une deuxième section de liaison (32) en forme de douille du deuxième corps partiel (30) sont disposées en recouvrement radial l'une par rapport à l'autre, **caractérisé en ce que**
la première section de liaison (12) en forme de douille est munie d'une zone de contre-dépouille (14) réalisée dans les directions axiale et circonférentielle, dans laquelle la deuxième section de liaison (32) en forme de douille est engagée pour établir l'assemblage à engagement positif par approche exclusivement radiale d'au moins un cylindre de formage (50), dans lequel la deuxième section de liaison (32) en forme de douille est épaissie radialement au moins dans certaines zones, et
**en ce que** le premier corps partiel (10) présente une section radiale (22) s'étendant radialement vers l'extérieur, dans laquelle une zone de compensation (24) est formée pour recevoir l'excédent de matière du deuxième corps partiel (20).
